# FASCICULE DE BREVET EUROPEEN

(11) **EP 3 343 531 B1**
(45) Date de publication et mention de la délivrance du brevet: **21.07.2021**
(21) Numéro de dépôt: 17208040.0
(22) Date de dépôt: 18.12.2017
(51) Int. Cl.: G08G 1/005

(54) **SYSTÈME DE COMMUNICATION D'INFORMATIONS À UN USAGER À PROXIMITÉ D'UN VÉHICULE AUTOMOBILE**
INFORMATIONSKOMMUNIKATIONSSYSTEM MIT EINEM NUTZER IN DER NÄHE EINES KRAFTFAHRZEUGS
SYSTEM FOR COMMUNICATING INFORMATION TO A USER IN THE VICINITY OF A MOTOR VEHICLE

(30) Priorité: 03.01.2017 FR 1750032
(43) Date de publication de la demande: 04.07.2018
(73) Titulaire: VALEO VISION, 93012 Bobigny Cedex (FR)
(72) Inventeur: BOILEVIN, Antoine, 93012 Bobigny Cedex (FR); GOSSELE, Frederic, 93012 Bobigny Cedex (FR); SANCHEZ, Vanesa, 93012 Bobigny Cedex (FR); FLEURY, Benoist, 93012 Bobigny Cedex (FR); LEBLANC, Francois, 93012 Bobigny Cedex (FR); LIARD, Laurent, 93012 Bobigny Cedex (FR)
(74) Mandataire: Valeo Visibility

(56) Documents cités:
- EP-A1- 1 221 684
- US-A1- 2004 183 659
- US-A1- 2009 085 770
- US-A1- 2015 298 598

## Description

### Domaine technique

La présente invention concerne un système de communication d'informations à un usager à proximité d'un véhicule automobile, et plus particulièrement un dispositif d'affichage stéréoscopique pour un tel véhicule automobile. L'invention concerne aussi un procédé de communication d'informations et un appareil portatif collaborant avec un véhicule automobile.

### État de la technique antérieure

De nos jours, la plupart des constructeurs proposent des dispositifs, également connus sous la dénomination de "mains libres", qui permettent notamment l'ouverture des portes du véhicule et le démarrage de ce dernier sans que l'usager n'ait le besoin d'insérer une clé dans la serrure du véhicule. Le champ de détection d'un tel dispositif mains libres peut être, par exemple, un cercle d'une dizaine de mètres autour du véhicule, ce qui permet le déverrouillage des portes dès lors que le porteur du dispositif mains libres est à l'intérieur de ce champ de détection. Ce type de dispositif mains libres est désormais également utilisé pour procéder à un allumage des feux de signalisation ou bien à l'allumage d'autres dispositifs d'éclairage du véhicule (par exemple des éléments de l'éclairage intérieur) lorsque le porteur du dispositif mains libres est à proximité du véhicule.

Il est ainsi possible de créer des scénarios de bienvenue, permettant une identification du véhicule par l'usager et une mise en valeur du véhicule aussi bien pour l'usager que pour les tiers à proximité. L'identification du véhicule est notamment utile lorsque ce véhicule est garé dans un parking ou lorsque l'usager rejoint son véhicule la nuit, afin de limiter le temps de recherche par l'usager de son véhicule. Ceci présente également l'avantage d'éclairer l'environnement immédiat du véhicule et de rassurer l'usager sur ses conditions d'accès au véhicule.

La présente invention vise à proposer une alternative aux dispositifs existants, dans un contexte de recherche d'un éclairage fortement distinctif du véhicule automobile afin de faciliter son repérage. Selon l'invention, on vise également à proposer une solution permettant, lorsque l'usager quitte le véhicule, de prendre connaissance d'informations utiles sur l'état du véhicule.

Le document US2009/085770 divulgue un dispositif mobile qui entre en communication avec un véhicule si une certaine proximité est atteinte.

### Exposé de l'invention

L'invention est définie par les revendications annexées.

Selon un premier aspect de l'invention, on atteint au moins l'un des objectifs précités avec un système de communication d'informations à un usager à proximité d'un véhicule automobile comprenant au moins une surface d'affichage, un dispositif de détection de la proximité de l'usager par rapport au véhicule, configuré pour émettre au moins une information de proximité de l'usager, au moins un dispositif lumineux agencé pour afficher au moins une image stéréoscopique sur l'au moins une surface d'affichage correspondante, et un module de commande pour configurer le dispositif lumineux en fonction de l'information de proximité de l'usager.

Le système de communication d'informations à un usager à proximité d'un véhicule automobile conforme au premier aspect de l'invention permet ainsi de communiquer des informations utiles à l'usager, comme à titre d'exemple non limitatif une signalisation du véhicule, un éclairage d'une scène de route entre le véhicule et l'usager, ou encore une information d'état du véhicule lorsque l'usager s'approche ou s'éloigne du véhicule, par l'intermédiaire d'un dispositif lumineux approprié rendant efficace la transmission d'informations.

Le système de communication d'informations à un usager à proximité d'un véhicule automobile conforme à l'invention comprend les caractéristiques ci-dessous:
- le dispositif lumineux comprend au moins une source de lumière configurée pour pouvoir émettre au moins un rayon lumineux et au moins une cellule lumineuse, chaque cellule lumineuse comprenant :
   - un guide d'onde agencé pour transporter au moins une partie de l'au moins un rayon lumineux émis par la source de lumière correspondante entre une première extrémité située du côté de la source de lumière et une deuxième extrémité ;
   - au moins un réseau de diffraction situé au niveau de la deuxième extrémité du guide d'onde, au moins une partie des réseaux de diffraction étant éclairée par l'au moins une partie des rayons lumineux transportés par le guide d'onde afin de générer au moins un lobe de diffraction. Ainsi, chaque réseau de diffraction éclairé génère un lobe de diffraction dans une direction particulière, et tous les réseaux de diffraction d'une cellule lumineuse forment collectivement un pixel lumineux. Finalement, la superposition et/ou l'adjonction de plusieurs cellules lumineuses permettent ainsi de former des images stéréoscopiques formées par la pluralité des pixels lumineux générés par chaque cellule lumineuse éclairée.

Le système de communication d'informations à un usager à proximité d'un véhicule automobile conforme à l'invention peut comprendre avantageusement au moins un des perfectionnements ci dessous, les caractéristiques techniques formant ces perfectionnements pouvant être prises seules ou en combinaison:
- le dispositif de détection est configuré pour calculer au moins une distance et/ou une trajectoire séparant l'usager du véhicule automobile, le module de commande configurant le dispositif lumineux en fonction en outre d'une information de distance et/ou de trajectoire de l'usager;
- le dispositif lumineux comprend un collimateur agencé pour coupler optiquement l'au moins une source de lumière avec le guide d'onde. Plus particulièrement, le collimateur comprend au moins une lentille convergente afin de rendre parallèle au moins une partie des rayons lumineux émis par la source de lumière correspondante et afin de faciliter leur injection dans le guide d'onde ;
- le dispositif lumineux comprend une pluralité de cellules lumineuses dont les guides d'ondes sont superposés les uns sur les autres afin de pouvoir générer une pluralité d'images stéréoscopiques superposées les unes aux autres, chaque image stéréoscopique étant formée par l'au moins un lobe de diffraction. Préférentiellement, le dispositif lumineux comprend autant de sources de lumière que de cellules lumineuses, chaque source de lumière étant couplée à l'un des guides d'onde desdites cellules lumineuses. Alternativement, le nombre de source de lumière est inférieur au nombre de cellules lumineuses, au moins une partie des sources de lumière étant couplée optiquement à plusieurs guides d'onde de cellules lumineuses. De manière avantageuse, le dispositif lumineux comprend une seule source de lumière couplée optiquement à chaque guide d'onde de chaque cellule lumineuse ;
- un premier réseau de diffraction a des premières caractéristiques dimensionnelles et un deuxième réseau de diffraction a des deuxièmes caractéristiques dimensionnelles différentes des premières caractéristiques dimensionnelles afin de générer des lobes de diffraction différents lorsqu'ils sont éclairés par l'au moins un rayon lumineux. Les caractéristiques dimensionnelles des réseaux de diffraction comprennent notamment la forme générale dudit réseau de diffraction, la forme des « créneaux » formant ledit réseau de diffraction, les différentes dimensions du réseau de diffraction et/ou les différentes dimensions des « créneaux » formant ledit réseau de diffraction ainsi que la distance entre deux « créneaux » directement adjacents. De manière connue, les motifs dimensionnels formant chaque réseau de diffraction représentent une « gravure stéréoscopique » d'une image interférentielle qui, lorsqu'elle est éclairée par une lumière particulière, génère le lobe de diffraction correspondant. La lumière éclairant les réseaux de diffraction est préférentiellement du type d'une lumière cohérente. Ainsi, chaque réseau de diffraction est agencé pour générer un lobe de diffraction correspondant lorsqu'il est soumis à un éclairage incident, de manière connue par l'homme du métier. En particulier, les différents réseaux de diffraction d'une cellule lumineuse du dispositif lumineux sont agencés pour former collectivement un pixel lumineux à partir de chaque lobe de diffraction. Et le contrôle de tout ou partie des cellules lumineuses du dispositif lumineux permet de générer des images stéréoscopiques à partir de chaque pixel lumineux produit par chaque cellule lumineuse. Un contrôle de chaque cellule lumineuse, indépendamment des autres cellules lumineuses du dispositif lumineux, permet de générer plusieurs images stéréoscopiques. En particulier, il est possible de générer des séquences animées d'images stéréoscopiques à partir des pixels lumineux de chaque cellule lumineuse ;
- les réseaux de diffraction de la pluralité de groupes de réseaux de diffraction sont orientés suivant une pluralité d'orientations. Par orientation, on entend une direction d'orientation principale des motifs dimensionnels du réseau de diffraction correspondant. En d'autres termes, il s'agit de la direction formée par lesdits créneaux et/ou la direction sensiblement perpendiculaire à la direction de répétition des motifs géométriques formant ledit réseau de diffraction ;
- le premier réseau de diffraction et le deuxième réseau de diffraction sont orientés suivant des directions différentes, et notamment l'un par rapport à l'autre ;
- un angle entre les orientations de deux groupes de réseaux de diffraction adjacents est constant ;
- les réseaux de diffraction forment collectivement les contours d'une forme polygonale, chaque réseau de diffraction étant orienté suivant la direction d'un côté de la forme polygonale sur lequel il est situé. Préférentiellement, la forme polygonale est du type d'un hexagone ;
- la surface d'affichage comprend un substrat transparent :
- le guide d'onde d'au moins une partie des cellules lumineuses du dispositif lumineux est au moins partiellement fixé solidairement sur le substrat transparent ;
- le guide d'onde d'au moins une partie des cellules lumineuses du dispositif lumineux est fixé par collage sur le substrat transparent, préférentiellement à l'aide d'une colle transparente. Alternativement, le guide d'onde d'au moins une partie des cellules lumineuses du dispositif lumineux est fixé par lamination sur le substrat transparent ;
- le substrat transparent est formé au moins en partie par le guide d'onde d'au moins une des cellules lumineuses du dispositif lumineux ;
- l'au moins une source de lumière est du type d'une source laser ou d'une diode électroluminescente. Éventuellement, le dispositif lumineux comprend plusieurs sources de lumière émettant chacune des rayons lumineux à des longueurs d'ondes différentes ;
- l'au moins une source de lumière est du type d'une diode laser ;
- l'au moins une source de lumière comprend une première source de lumière émettant au moins un rayon lumineux d'une première couleur, par exemple rouge, une deuxième source de lumière émettant au moins un rayon lumineux d'une deuxième couleur, par exemple verte, et une troisième source de lumière émettant au moins un rayon lumineux d'une troisième couleur, par exemple bleu. D'une manière plus générale, les première, deuxième et troisième sources de lumière peuvent prendre n'importe quelle couleur; en d'autres termes, chaque source de lumière peut émettre une lumière de n'importe quelle longueur d'onde visible.
- le dispositif lumineux comprend un moyen de multiplexage optique agencé pour éclairer sélectivement chaque réseau de diffraction de chaque cellule lumineuse. Le moyen de multiplexage optique permet d'orienter au moins une partie des rayons lumineux générés par l'au moins une source de lumière vers au moins une partie des réseaux de diffraction d'une ou plusieurs cellules lumineuses. Alternativement, le moyen de multiplexage optique est agencé pour éclairer sélectivement chaque groupe de réseaux de diffraction, tous les réseaux de diffraction étant collectivement adressés par le moyen de multiplexage optique.
- le moyen de multiplexage optique comprend une pluralité de déflecteurs pilotables, agencés pour pouvoir prendre au moins une première configuration permettant d'orienter une partie des rayons lumineux vers au moins une partie des réseaux de diffraction d'une des cellules lumineuses et une deuxième configuration permettant de ne pas éclairer ladite au moins une partie des réseaux de diffraction de ladite une des cellules lumineuses du dispositif lumineux. À titre d'exemples non limitatifs, le moyen de multiplexage optique peut comprendre au moins un miroir réfléchissant ou semi-réfléchissant et/ou au moins une lentille et/ou une pluralité de miroirs basculant entre deux configurations angulaires différentes. Le moyen de multiplexage optique comprend aussi une pluralité d'actionneurs pilotables et permettant de sélectionner sélectivement ou collectivement le ou les réseaux de diffraction à éclairer afin de générer le lobe de diffraction correspondant et de permette de générer in fine une image stéréoscopique particulière ;
- le dispositif lumineux comprend un obturateur optique situé à l'aplomb d'au moins une partie des cellules lumineuses, ledit obturateur optique étant au moins configurable dans une première configuration dans laquelle au moins un des lobes de diffraction formés par l'un des réseaux de diffraction d'une cellule lumineuse et/ou les pixels lumineux formés par tous les réseaux de diffraction d'une cellule lumineuse sont transmis au travers dudit obturateur optique, et une deuxième configuration dans laquelle au moins un des lobes de diffraction formés par l'un des réseaux de diffraction d'une cellule lumineuse et/ou les pixels lumineux formés par tous les réseaux de diffraction d'une cellule lumineuse sont absorbées par ledit obturateur optique. Ainsi, l'obturateur optique permet de sélectionner les pixels lumineux générés par les cellules lumineuses et qui seront « visibles » par un utilisateur du dispositif lumineux. En d'autres termes, l'obturateur optique joue le rôle d'un filtre spatial permettant de construire des images stéréoscopiques en sélectionnant les pixels lumineux transmis par ledit obturateur optique ;
- l'obturateur optique comprend une pluralité de cellules d'obturation pouvant être configurées sélectivement ou collectivement dans la première et la deuxième configuration ;
- l'obturateur optique est formé d'un écran à cristaux liquides. Alternativement, l'obturateur optique est formé d'un écran de technologie d'électro-mouillage ;
- le dispositif de détection de proximité de l'usager par rapport au véhicule comprend des moyens de communication embarqués sur le véhicule et des moyens de communication embarqués sur un appareil portatif porté par l'usager, ces moyens de communications étant configurés pour communiquer entre eux ; notamment, l'appareil portatif porté par l'usage peut consister en une clé de démarrage du véhicule automobile ou en un téléphone portable ;
- le dispositif de détection de proximité de l'usager comporte en outre des moyens d'acquisition et de traitement d'image, par exemple des moyens photo ou vidéo, configurés pour compléter l'information de proximité de l'usager par une information qualifiant cet usager ; on saura de la sorte, à titre d'exemple non limitatifs, réaliser une reconnaissance faciale de l'usager en approche du véhicule, et proposer en fonction de cette information qualifiant l'usager, c'est-à-dire qui permet de déterminer quel est l'usager qui approche, un type ou une séquence d'éclairage particulier et spécifique à cet usager.

Un tel système de communication peut équiper selon l'invention aussi bien un véhicule automobile qu'un appareil portatif porté par un utilisateur, et on peut prévoir notamment que le dispositif lumineux équipe aussi bien le véhicule que l'appareil portatif. On saura décrire dans ce qui suit l'intérêt pour l'usager d'équiper son véhicule ou son appareil d'un tel dispositif lumineux dans un système de communication d'informations selon le premier aspect de l'invention, et le cas échéant l'intérêt qu'un dispositif lumineux soit prévu à la fois sur le véhicule et sur l'appareil portatif.

Dans un premier cas où le dispositif lumineux est implanté sur le véhicule, on peut prévoir qu'au moins un élément d'éclairage et/ou de signalisation du véhicule automobile est piloté simultanément avec le dispositif lumineux du système de communication en fonction de l'information de proximité de l'usager ; de la sorte, il est possible de proposer une diversité de scénarii d'éclairage à la détection d'un usager s'approchant du véhicule, en jouant aussi bien sur la projection d'image stéréoscopique, permettant notamment la projection de pictogramme ou de messages personnalisés, que sur la mise en œuvre d'un faisceau lumineux par l'intermédiaires des phares avant par exemple, permettant notamment d'attirer l'attention de l'usager par une étendue lumineuse et une intensité lumineuse importante ;

Dans ce même contexte, la surface d'affichage peut être choisie parmi :
- une partie de la carrosserie du véhicule automobile ;
- au moins une partie du pare-brise ;
- au moins une partie des vitres latérales ;
- au moins une partie de la lunette arrière.

Le système de communication d'informations à un usager peut comporter une pluralité de dispositifs lumineux embarqués sur le véhicule et pilotés par le module de commande pour être activés sélectivement ou collectivement en fonction de l'information de proximité. Et dans ce cas, une source de lumière peut être commune à plusieurs dispositifs lumineux agencés respectivement au voisinage de surfaces d'affichage distinctes.

Dans un deuxième cas où le dispositif lumineux est implanté sur l'appareil portatif porté par l'utilisateur, l'appareil portatif peut notamment être du type d'une clef de démarrage du véhicule automobile, ou bien du type d'un téléphone portable.

Selon un autre aspect de l'invention, il est proposé un procédé de communication d'informations à un usager à proximité d'un véhicule automobile au cours duquel on détecte, par l'intermédiaire d'un dispositif de détection, un usager situé à proximité du véhicule automobile afin de générer une information de proximité dudit usager, le dispositif de détection envoie l'information de proximité de l'usager à un module de commande, et le module de commande configure un dispositif lumineux de façon que ce dispositif lumineux affiche au moins une image stéréoscopique sur une surface d'affichage du véhicule ou d'un appareil portatif porté par l'usager, en fonction de l'information de proximité.

Selon une caractéristique additionnelle du procédé, on peut détecter une distance entre l'usager et le véhicule et l'évolution de cette distance, révélatrice d'un sens de déplacement de l'usager, et on peut adapter l'activation d'un dispositif lumineux pour la projection d'une image stéréoscopique en fonction de ce sens de déplacement de l'usager, notamment pour prévoir sur quel support d'affichage projeter l'image stéréoscopique appropriée, selon que le sens de déplacement de l'usager semble indiquer qu'il a la tête tournée vers le véhicule ou à l'opposé de celui-ci.

Des modes de réalisation variés de l'invention sont prévus, intégrant selon l'ensemble de leurs combinaisons possibles les différentes caractéristiques optionnelles exposées ici.

### Description des figures

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1 illustre une vue schématique d'un exemple de réalisation de cellule lumineuse agencée pour générer une pluralité d'images stéréoscopiques dans plusieurs directions ;
- la FIGURE 2 illustre une vue schématique en coupe d'un exemple de réalisation de dispositif lumineux permettant de sélectionner une partie des images stéréoscopiques générées par une cellule lumineuse telle qu'illustrée sur la FIGURE 1;
- les FIGURES 3 et 4 illustrent deux premières variantes d'une mise en œuvre d'un système de communication d'informations à un usager selon l'invention, différentes en ce que l'image stéréoscopique illustrée sur la figure 2 est projetée sur la face avant du véhicule (FIGURE 3) ou sur la lunette arrière (FIGURE 4) ;
- et les FIGURES 5 et 6 illustrent deux autres cas d'application différents du système de communication d'informations selon l'invention, différents en ce que le dispositif lumineux susceptible de générer une image stéréoscopique selon le principe illustré sur la figure 2 est embarqué sur le véhicule (FIGURE 5) ou sur un appareil portatif porté par l'usager (FIGURE 6).

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

### Description détaillée de l'invention

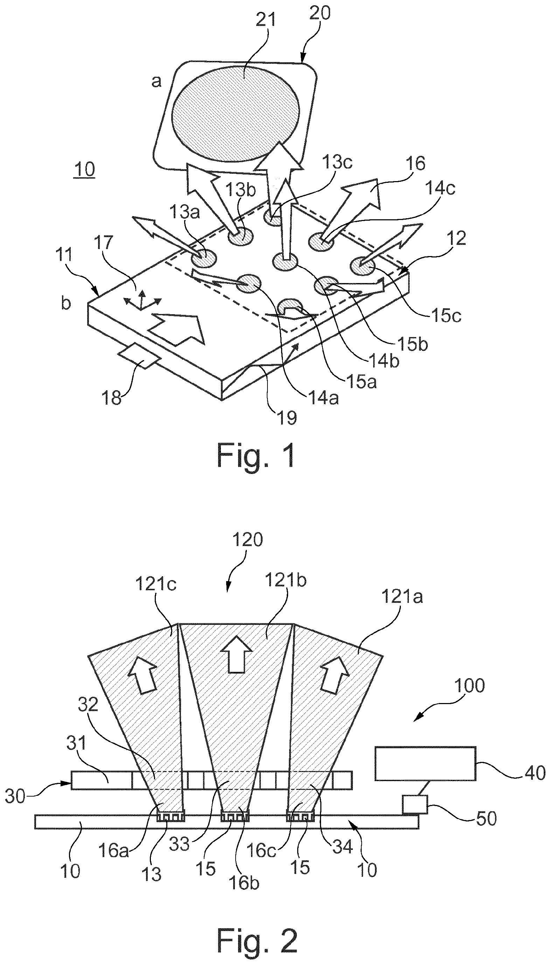

La FIGURE 1 illustre un exemple de réalisation d'une cellule lumineuse 10 d'un dispositif lumineux 100 équipant un système de communication d'informations 1 à un usager 200 à proximité d'un véhicule 300, conforme à un premier aspect de l'invention, le dispositif lumineux permettant de générer une pluralité d'images en trois dimensions, visibles à l'intérieur d'une zone de vision 120 (FIGURE 2) très large pouvant s'étendre jusqu'à 180°. Le dispositif lumineux 100 est agencé pour générer les images tridimensionnelles de manière simultanée ou séquentielle et selon des directions et des orientations différentes.

Plus particulièrement, le dispositif lumineux 100 comprend une pluralité de cellules lumineuses 10, chaque cellule lumineuse 10 mettant en œuvre une pluralité de réseaux de diffraction orientés dans une direction particulière. À cet effet, le dispositif lumineux 100 comprend :
- au moins une source de lumière 40, préférentiellement de type électroluminescente, agencée pour générer au moins un rayon lumineux 18 ;
- une pluralité de cellules lumineuses 10 couplées optiquement à la source de lumière par l'intermédiaire d'au moins un collimateur, chaque cellule lumineuse 10 comprenant :
   ∘ un guide d'onde 17 prenant la forme d'un film au moins en partie transparent et de faible épaisseur à l'intérieur duquel l'au moins un rayon lumineux 18 est propagé ;
   ∘ un premier groupe de réseaux de diffraction 13a-13c formés sur une surface du guide d'onde 17 et orienté suivant une première direction ;
   ∘ un deuxième groupe de réseaux de diffraction 14a-14c formés sur la surface du guide d'onde 17 et orienté suivant une deuxième direction ;
   ∘ un troisième groupe de réseaux de diffraction 15a-15c formés sur la surface du guide d'onde 17 et orienté suivant une troisième direction ;

Chaque cellule lumineuse 10 et/ou chaque réseau de diffraction 13-15 d'une cellule lumineuse 10 peut être adressé sélectivement ou collectivement à l'aide de moyens de multiplexages non visibles sur la FIGURE 1. Éventuellement, les cellules lumineuses 10 et/ou la pluralité de réseaux de diffraction 13-15 peut aussi être collectivement ou sélectivement modulée grâce à un obturateur 30 externe non décrit sur la FIGURE 1 et qui sera détaillé en référence à la FIGURE 2. La fréquence de modulation est préférentiellement de l'ordre d'une fréquence vidéo, c'est-à-dire de plusieurs dizaines ou centaines de Hertz.

Chaque réseau de diffraction 13-15 est gravé sur une même surface du guide d'onde 17 ou fixé solidairement sur ladite surface dudit guide d'onde 17, préférentiellement par collage. Bien entendu, les caractéristiques morphologiques et/ou dimensionnelles de chaque réseau de diffraction 13-15 dépendent de l'image tridimensionnelle à former. En d'autres termes, chaque réseau de diffraction 13-15 est gravé de manière à générer une image particulière lorsqu'il est éclairé par l'au moins une partie des rayons lumineux générés par l'au moins une source de lumière.

Le guide d'onde 17 est agencé pour permettre aux rayons lumineux générés par l'au moins une source de lumière de se propager à l'intérieur dudit guide d'onde, par réflexion interne totale. Plus particulièrement, chaque source de lumière est couplée optiquement au guide d'onde 17 au niveau d'une zone de collimation 11 par l'intermédiaire d'un collimateur par exemple ou par l'intermédiaire d'un réseau de diffraction, non représenté sur la FIGURE 1, afin qu'au moins une partie des rayons lumineux 18 générés par la source de lumière correspondante soient introduits dans ledit guide d'onde 17. Les rayons lumineux 18 se propagent à l'intérieur de la zone de collimation 11 et en direction de la pluralité des réseaux de diffraction.

Lorsque les rayons lumineux 18 arrivent au niveau d'un réseau de diffraction 13-15, ils interagissent avec le réseau de diffraction 13-15 correspondant et sont diffractés, formant des lobes de diffraction 16 dans une direction donnée par l'orientation du réseau de diffraction et le sens d'illumination dudit réseau de diffraction.

Dans le cas où la cellule lumineuse 10 comprend plusieurs réseaux de diffraction 13-15, chaque réseau de diffraction éclairé génère un lobe de diffraction correspondant dans une direction particulière conditionnée par l'orientation du réseau de diffraction correspondant. Ainsi, un observateur peut recevoir dans son œil droit une partie des rayons appartenant à un premier groupe de lobes de diffraction, et dans son œil gauche des rayons appartenant à un deuxième groupe de lobes de diffraction. Le premier groupe de lobes lumineux et le deuxième groupe de lobes lumineux d'une formés par les réseaux de diffraction d'une cellule lumineuse forment collectivement un pixel lumineux visible par l'observateur. Les intensités des lobes de diffraction n'étant pas les mêmes, il est possible de générer un effet stéréoscopique volumétrique, faisant apparaître à l'observateur le pixel lumineux de la cellule lumineuse 10 dans une position proximale ou distale par rapport au guide d'onde 11.

Pour une orientation donnée du réseau de diffraction 13-15, un éclairage par un premier côté du réseau de diffraction 13-15 produit un premier lobe de diffraction ; et un éclairage par un deuxième côté du même réseau de diffraction 13-15 produit un second lobe de diffraction. Le pixel lumineux correspondant aux lobes de diffraction produits par les réseaux de diffraction 13-15 de la cellule lumineuse 10 apparait ainsi comme étant situé soit devant, soit derrière le plan du guide d'onde 11. Il est ainsi possible de produire un effet de battement du point lumineux par la simple alternance de la direction depuis laquelle les réseaux de diffraction 13-15 sont éclairés.

La génération sur le même guide d'onde 11 de plusieurs cellules lumineuses 10 (non représentées sur la FIGURE 1) permet de créer plusieurs pixels lumineux, qui forment collectivement une image stéréoscopique pour l'observateur.

Par ailleurs, les réseaux de diffraction 13-15 sont conçus pour une longueur d'onde donnée, de manière à pouvoir interagir avec des rayons lumineux produits par une source de lumière correspondante à la même longueur d'onde. Il est possible de générer sur le même guide d'onde 17 plusieurs réseaux de diffraction correspondant à plusieurs longueurs d'onde différentes, et en particuliers trois réseaux de diffraction correspondant à trois longueurs d'ondes différentes, ou trois groupes de réseaux de diffraction, chaque groupe de réseaux de diffraction étant conçu pour l'une des trois longueurs d'ondes données. En variant la direction d'incidence des différentes sources de lumière, il est ainsi possible de générer trois images de couleur différente, simultanément ou alternativement.

Il est ainsi possible de générer des images tridimensionnelles en couleur sans utiliser des filtres de couleurs et de manière plus simple à l'aide d'un dispositif lumineux 100 complètement transparent. Consécutivement, il est aussi possible de réaliser des séquences animées de plusieurs images tridimensionnelles d'une manière très simple.

À titre d'exemple non limitatif, la cellule lumineuse 10 illustrée sur la FIGURE 1 comprend un substrat en verre jouant le rôle de guide d'onde 17, à la surface duquel une couche de nitrure de silicium est déposée, préférentiellement par dépôt en phase vapeur électrochimique, et préférentiellement encore suivant une épaisseur de 100 nm. Les réseaux de diffraction 13-15 sont gravés à la surface de la couche de nitrure de silicium par des méthodes connues de lithographie.

Le détail sur la FIGURE 1 illustre une vue par microscopie électronique à balayage d'un réseau de diffraction 20 d'une telle cellule lumineuse 10 d'un dispositif lumineux conforme au premier aspect de l'invention. Le réseau de diffraction 20 est fabriqué par des techniques classiques de photolithographie et comprend une pluralité de créneaux 21 tous parallèles et orientés suivant une direction principale, chaque créneau 21 étant rectiligne.

Par ailleurs, sur la FIGURE 1, on a illustré de manière schématique les différents lobes de diffraction 16 projetés par chaque réseau de diffraction d'une cellule lumineuse 10 du dispositif lumineux 100 conforme au premier aspect de l'invention. La cellule lumineuse 10 est éclairée par une lumière collimatée 18 formée des rayons lumineux qui sont générés par une source de lumière non représentée. Chaque réseau de diffraction 13-15 ainsi éclairé disperse les rayons lumineux correspondants 18 par diffraction au premier ordre : chaque réseau de diffraction 13-15 forme un lobe de diffraction résultant de l'interaction des rayons lumineux incidents 18 avec la forme des créneaux dudit réseau de diffraction 13-15. Chaque réseau de diffraction 13-15 forme un lobe de diffraction 16 dans une direction particulière, les directions particulières de tous les réseaux de diffraction 13-15 de la cellule lumineuse 10 formant la zone de vision 120. Tous les lobes de diffraction 16 d'une cellule lumineuse forment un pixel lumineux.

Ainsi, un dispositif lumineux comprenant une pluralité de cellules lumineuses 10 telles qu'illustrée sur la FIGURE 1 permet de générer une pluralité d'images statiques tridimensionnelles, sous l'effet de l'éclairage des réseaux de diffraction 13-15 correspondants par une lumière collimatée.

La FIGURE 2 illustre un exemple de réalisation d'un dispositif lumineux 100 conforme au premier aspect de l'invention comprenant une pluralité de cellules lumineuses 10 telles que décrites précédemment. La pluralité de cellules lumineuses 10 est éclairée par une source de lumière 40. La source de lumière 40 est couplée optiquement aux cellules lumineuses 10 par l'intermédiaire d'un collimateur 50. Le dispositif lumineux 100 comprend aussi un obturateur 30 situé à l'aplomb des cellules lumineuses 10. L'obturateur 30 est agencé pour permettre d'occulter tout ou partie d'un plan transverse à la propagation des lobes de diffraction 16 et/ou des pixels lumineux générés par les cellules lumineuses 10. Plus particulièrement, l'obturateur 30 comprend une pluralité de cellules d'obturation 31-34, chaque cellule d'obturation 31-34 pouvant être pilotée sélectivement ou collectivement par rapport aux autres cellules d'obturation 31-34. L'obturateur 30 est piloté par un module de commande non représenté afin de configurer chaque cellule d'obturation 31-34 dans une configuration passante ou dans une configuration bloquante, chaque cellule d'obturation 31-34 comprenant des électrodes reliées électriquement audit module de commande afin de pouvoir les polariser électriquement.

Dans la configuration passante, la cellule d'obturation 31-34 correspondante a un coefficient de transmission maximal, et préférentiellement sensiblement égal à 1, afin d'être transparente ou quasi transparente et de laisser passer le(s) lobe(s) de diffraction formé(s) par une partie des réseaux de diffraction 13-15 situé en dessous. Dans la configuration bloquante, la cellule d'obturation 31-34 correspondante a un coefficient de transmission minimal, et préférentiellement sensiblement égal à zéro, afin d'être opaque ou quasi opaque et d'absorber les rayons lumineux diffractés par une partie des réseaux de diffraction 13-15 situé en dessous.

La configuration passante d'une cellule d'obturation 31-34 est obtenue pour une première valeur du champ électrique appliqué entre ses bornes, par exemple pour un potentiel électrique haut, correspondant à une tension de polarisation non nulle. A contrario, la configuration bloquante d'une cellule d'obturation 31-34 est obtenue pour une deuxième valeur du champ électrique appliqué entre ses bornes, par exemple pour un potentiel électrique minimal, correspondant à une tension de polarisation nulle ou minimale.

Les cellules d'obturation 31-34 sont pilotées par le module de commande de manière à être configurées dans l'une ou l'autre des configurations précédentes pour sélectionner un ou plusieurs lobes de diffraction et/ou pixels lumineux formés par les réseaux de diffraction 13-15 situés en dessous. Ainsi, une modulation des cellules d'obturation 31-34 permet de sélectionner séquentiellement une pluralité de lobes de diffraction 16a-16c et/ou une pluralité de pixels lumineux formés par les réseaux de diffraction 13-5 situés en dessous, permettant ainsi de produire un effet visuel dynamique d'images tridimensionnelles 121a-121c.

À titre d'exemple non limitatif, l'obturateur 30 peut avantageusement prendre la forme d'un écran à cristaux liquides, chaque cellule d'obturation 31-34 étant formée par une cellule à cristaux liquide pouvant être configurée dans une configuration passante ou une configuration bloquante en fonction du champ électrique appliqué entre ses bornes. En particulier l'obturateur 30 peut préférentiellement être du type d'un écran à électromouillage.

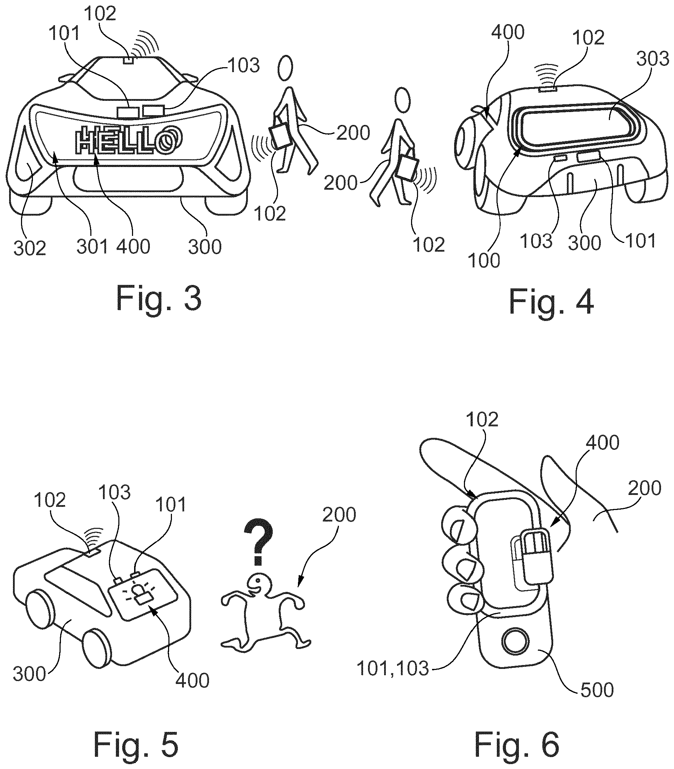

Les FIGURES 3 à 6 illustrent des exemples d'application d'un système de communication d'informations 1 à un usager 200 à proximité d'un véhicule 300 conforme au premier aspect de l'invention, et mettant en œuvre un dispositif lumineux 100 permettant de générer au moins une image stéréoscopique 400. Dans chacun des cas d'application, un module de commande 101 est prévu pour configurer le dispositif lumineux afin de permettre l'affichage d'au moins une image stéréoscopique en fonction d'une détection de proximité d'un usager. Pour faciliter la compréhension de l'invention, le dispositif de détection 102 et le module de commande 101 associés au système de communication ont été représentés de façon schématique.

Tel que cela sera compris ci-après, chacun des cas d'application est mis en œuvre par une première étape de détection d'un usager situé à proximité du véhicule automobile afin de générer une information de proximité dudit usager, et par une deuxième étape d'affichage d'au moins une image stéréoscopique sur une surface d'affichage du véhicule ou d'un appareil portatif porté par l'usager, en fonction de l'information de proximité.

Le dispositif lumineux 100 appliqué dans chacun de ces cas est agencé pour afficher une pluralité d'images stéréoscopiques dans au moins deux directions différentes sur une surface d'affichage pour le dispositif lumineux.

Conformément à ce qui a pu être décrit précédemment, et afin de générer la pluralité d'images stéréoscopiques, le dispositif lumineux 100 comprend avantageusement (i) au moins une source de lumière configurée pour pouvoir émettre au moins un rayon lumineux et au moins une cellule lumineuse, chaque cellule lumineuse comprenant (i) un guide d'onde agencé pour transporter au moins une partie de l'au moins un rayon lumineux émis par la source de lumière correspondante entre une première extrémité située du côté de la source de lumière et une deuxième extrémité, et (ii) une pluralité de groupes de réseaux de diffraction situés au niveau de la deuxième extrémité du guide d'onde, au moins une partie des réseaux de diffraction étant éclairée par l'au moins une partie des rayons lumineux transportés par le guide d'onde afin de générer au moins un lobe de diffraction, l'ensemble des lobes de diffraction générés par les réseaux de diffraction éclairés formant l'au moins une image stéréoscopique.

On saura décrire ci-après, notamment selon les cas d'application, les zones d'implantation du ou des dispositifs lumineux sur le véhicule et/ou sur un appareil portatif porté par l'usager.

Selon l'invention, l'information délivrée à l'usager lorsqu'il est à proximité du véhicule est fonction de la détection de cet usager. Le dispositif de détection de proximité 102 de l'usager comprend des moyens de communication embarqués sur le véhicule et des moyens de communication embarqués sur l'appareil portatif porté par l'usager. Ces moyens de communications sont configurés pour communiquer entre eux. Ce dispositif de détection peut notamment comprendre un moyen de réception/émission embarqué sur le véhicule et configuré pour recevoir un type de signal susceptible d'être émis par au moins un moyen d'émission embarqué sur l'appareil portatif. Suite à la réception du signal, le moyen de réception/émission est configuré pour envoyer une information à une unité de traitement 103 configurée pour traiter l'information de proximité de l'usager 200 et pour la transmettre par la suite au module de commande 101 afin qu'il génère une instruction de commande du dispositif lumineux en fonction de l'information de proximité.

L'information de proximité de l'usager, c'est-à-dire l'information selon laquelle l'usager est présent dans un champ d'interaction des moyens de communication, peut suffire au déclenchement du dispositif lumineux du système de communication selon l'invention. Un mode standard de communication d'informations à l'usager est alors déclenché, de sorte qu'un dispositif lumineux dans une zone prédéterminée du véhicule est mis en œuvre pour générer une image stéréoscopique ou une séquence d'images stéréoscopiques prédéterminée.

Ainsi, on a illustré sur la FIGURE 3 un mode standard de communication, dans lequel à l'entrée d'un usager dans un champ de détection autour du véhicule, un dispositif lumineux 100 ici intégré, au moins en partie, au niveau d'une face avant 301 du véhicule 300, est piloté par le module de commande 101 associé pour générer une image stéréoscopique. En particulier, le guide d'onde et la pluralité de groupes de réseaux de diffraction sont situés au niveau d'une portion vitrée de cette face avant 300 afin de générer les images stéréoscopiques correspondantes au niveau de cette portion vitrée de la face avant. On pourra prévoir que le dispositif lumineux est intégré dans un projecteur de feux avant du véhicule, ou bien qu'il est, conformément à l'illustration de la figure 3, intégré dans une portion vitrée distincte des éléments d'éclairage et/ou de signalisation 302 prévus classiquement par ailleurs.

Le dispositif lumineux 100 est piloté par un module de commande 101 associé pour générer une image stéréoscopique lorsque l'usager 200 est détecté à proximité du véhicule 300, par l'intermédiaire du dispositif de détection 102. Dans ce mode standard, on pourra choisir d'avoir d'autres zones d'affichages de l'image stéréoscopique et le cas échéant, une pluralité de ces zones, sans que l'on sorte du cadre de l'invention. On comprend que dans ce mode standard de communication illustré sur la FIGURE 3, la ou les surface(s) d'affichage prédéterminée(s) pour l'image stéréoscopique sont automatiquement éclairées quel que soit l'endroit où se situe l'usager, dès lors qu'il se trouve dans un champ de détection déterminé.

Cette ou ces surfaces d'affichage peuvent être formées par une partie de la carrosserie du véhicule automobile et/ou par au moins une partie du pare-brise et/ou par au moins une partie des vitres latérales et/ou par au moins une partie de la lunette arrière.

En fonction des images stéréoscopiques à générer, le module de commande configure la ou les sources de lumières et adresse le ou les réseaux de diffraction correspondants afin de générer lesdites images stéréoscopiques correspondantes. Les sources de lumière sont du type sources laser, émettant préférentiellement une lumière cohérente, éventuellement de couleurs différentes.

Le dispositif lumineux 100 est alors configuré pour émettre une première série d'images stéréoscopiques indiquant à l'utilisateur du véhicule où se situe celui-ci, et notamment sa face avant, et/ou indiquant un message ou un logo de bienvenue. À cet effet, la première série d'images stéréoscopiques est par exemple affichée dans une première direction donnant la perception à l'utilisateur que lesdites images stéréoscopiques sont situées dans un plan situé en avant de la face avant 300 du véhicule.

Un tel effet est obtenu grâce à au moins une cellule lumineuse dont au moins une partie des réseaux de diffraction sont éclairés par des rayons lumineux émis par les sources de lumière correspondantes et polarisées électriquement à cet effet. Les rayons lumineux émis par les sources de lumière se propagent à l'intérieur du guide d'onde pour parvenir au niveau d'un ou plusieurs groupes de réseaux de diffraction et selon un premier angle d'incidence. L'interaction entre les rayons lumineux et le ou les groupes de réseaux de diffraction produit plusieurs lobes de diffraction. Bien entendu, chaque réseau de diffraction comprend des structures dimensionnelles particulières formant un et un seul lobe de diffraction lorsqu'il est éclairé par des rayons lumineux des sources de lumière. L'ensemble des lobes de diffraction générés par les réseaux de diffraction éclairés forment collectivement l'au moins une image stéréoscopique

Dans l'exemple illustré sur la FIGURE 3, les réseaux de diffraction éclairés par les sources de lumière selon un premier angle d'incidence forment collectivement le mot « HELLO » dans une première direction qui apparait à l'utilisateur comme étant située en avant de la face avant 300. Bien entendu, n'importe quel autre mot ou n'importe quel autre symbole pourrait être représenté à l'aide d'un tel dispositif lumineux, les formes et dimensions des motifs géométriques formant lesdits réseaux de diffraction étant déterminés par simulation optique de leur collaboration avec les rayons lumineux émis par les sources de lumière.

On comprend que la mise en œuvre d'un dispositif lumineux 100 au voisinage d'une surface d'affichage appropriée, notamment en mettant en regard de cette surface d'affichage le guide d'onde 17 et la face sur laquelle sont formées les réseaux de diffraction, permet l'affiche d'image(s) stéréoscopique(s) particulièrement efficace en terme d'information à communiquer à un usager, ces images stéréoscopiques pouvant prendre la forme de pictogramme(s) et/ou de message(s) écrits au contenu sans équivoque pour l'utilisateur.

A intervalle de temps régulier, on pourra commander le dispositif lumineux 100 pour qu'il émette une deuxième série d'images stéréoscopiques, rendant dynamique le message transmis sur la face avant. A titre d'exemple, la deuxième série d'images stéréoscopiques est identique à la première série d'images stéréoscopiques, mais la deuxième série d'images stéréoscopiques est affichée dans une deuxième direction, différente de la première direction, et donnant la perception à l'utilisateur que la deuxième série d'images stéréoscopiques est située plus à droite que la première série d'images.

Un tel effet est obtenu grâce à au moins une cellule lumineuse dont au moins une partie des réseaux de diffraction sont éclairés par des rayons lumineux émis par les sources de lumière correspondantes et polarisées électriquement à cet effet. Les rayons lumineux émis par les sources de lumière se propagent à l'intérieur du guide d'onde pour parvenir au niveau d'un ou plusieurs groupes de réseaux de diffraction et selon un deuxième angle d'incidence. Les réseaux de diffraction sont éclairés depuis une deuxième direction différente de la première direction d'éclairage afin de produire des deuxièmes lobes de diffraction, mais dans une direction sensiblement différente, afin de donner l'impression que l'image stéréoscopique s'est déplacée.

Le dispositif de détection 102 peut comporter des moyens d'acquisition et de traitement d'image, par exemple des moyens photo ou vidéo, configurés pour compléter l'information de proximité de l'usager par une information qualifiant cet usager. On peut dès lors proposer un affichage spécifique à tel ou tel usager, en personnalisant le message à l'attention de l'usager détecté.

Les réseaux de diffraction du dispositif lumineux sont agencés pour générer collectivement un ou plusieurs messages lumineux à l'attention du conducteur du véhicule automobile. En fonction des informations à afficher, le dispositif lumineux est configuré pour éclairer un groupe particulier de réseaux de diffraction. On peut ainsi choisir le type de pictogramme projeté sous forme d'image stéréoscopique par le dispositif lumineux 100, ou bien individualiser le message projeté, également sous forme d'image stéréoscopique par le dispositif lumineux 100, en fonction de l'usager détecté.

Par exemple, selon des réglages de fonctionnement choisis par tel ou tel usager, les images stéréoscopiques générées par les réseaux de diffraction des dispositifs lumineux peuvent être statiques ou dynamiques. Comme décrit précédemment, une image stéréoscopique générée par un réseau de diffraction du dispositif lumineux est statique lorsque le dispositif lumineux est configuré pour éclairer de manière invariante le réseau de diffraction correspondant sous un angle d'incidence donné. A contrario, une image stéréoscopique générée par un réseau de diffraction du dispositif lumineux est dynamique lorsque le dispositif lumineux est configuré pour éclairer successivement une pluralité de réseaux de diffraction afin de générer une successivement plusieurs images stéréoscopiques statiques, ou lorsque le dispositif lumineux est configuré pour éclairer simultanément plusieurs réseaux de diffraction dans une pluralité de directions et pour filtrer spatialement certaines des images stéréoscopiques statiques ainsi générées. Ainsi, dans cette deuxième variante de réalisation d'images stéréoscopiques dynamiques, l'évolution dynamique d'un obturateur multizones situé au-dessus de la surface d'affichage permet de configurer un coefficient de transmission pour chaque zone dudit obturateur et de transmettre ou de bloquer au moins une image stéréoscopique générée par le réseau de diffraction correspondant situé en dessous. Le pilotage dynamique de l'obturateur multizones, par l'intermédiaire d'instructions générées par le module de commande, permet de sélectionner une ou plusieurs zones dans lesquelles l'image stéréoscopique statique correspondante générée par le réseau de diffraction situé directement en dessous est transmise, et donc visible. De manière analogue, le pilotage dynamique de l'obturateur multizones permet de sélectionner une ou plusieurs zones dans lesquelles l'image stéréoscopique statique correspondante générée par le réseau de diffraction situé directement en dessous est bloquée, et donc non visible.

En fonction de l'usager détecté, ou bien dans un mode standard prédéterminé, on peut également prévoir de mettre en œuvre l'allumage d'élément(s) d'éclairage et/ou de signalisation du véhicule automobile, distinct(s) de la ou des surfaces d'affichage du système de communication d'informations à l'usager. Les phares du véhicule peuvent ainsi être allumés simultanément avec le dispositif lumineux du système de communication en fonction de l'information de proximité de l'usager : il est dès lors possible de proposer une diversité de scénarii d'éclairage à la détection d'un usager s'approchant du véhicule, et de choisir le scénario adapté à tel ou tel usager. L'affichage d'images stéréoscopiques, permettant notamment l'affichage de pictogramme ou de messages personnalisés, pourra être conservée seule, ou accompagnée d'une projection d'un faisceau lumineux sur le sol ou sur un plafond de parking par exemple, afin notamment d'attirer l'attention de l'usager par une étendue lumineuse et une intensité lumineuse importante.

Selon une variante de réalisation, l'unité de traitement 103 peut être configurée pour calculer une distance et/ou une position séparant l'usager du véhicule automobile, et le cas échéant pour calculer une trajectoire de déplacement de l'usager. Le module de commande configurant le dispositif lumineux est alors apte à recevoir une information de distance et/ou de position, et le cas échéant une information de trajectoire de l'usager, pour adapter l'information à communiquer à l'usager.

Dans un mode de réalisation particulier, on peut prévoir que le dispositif de détection 102 fournit, dès détection de l'usager, une information sur la position de ce dernier à des moyens de calcul de l'unité de traitement 103, configurés pour déterminer une trajectoire de l'usager. On comprend que par information sur la position de l'usager, on peut comprendre avantageusement que les moyens de détection fournissent aux moyens de calcul une pluralité de données, en temps réel, permettant d'établir une direction et un sens de déplacement de l'usager et d'en déduire une trajectoire entre la position détectée et la porte d'entrée du véhicule.

On comprend, en se référant à la FIGURE 4, un premier intérêt d'une détection de position de l'usager, plutôt que la détection simple de présence de l'usager dans un champ de détection périphérique autour du véhicule.

Ainsi, en fonction de la position de l'usager, on peut définir une zone d'affichage de l'image stéréoscopique appropriée pour que l'image soit le plus visible possible par l'usager. Sur la FIGURE 4, on a détecté que l'usager arrivait par l'arrière du véhicule et le module de commande du système de communication d'informations selon l'invention a transmis l'information de proximité de l'usager à un dispositif lumineux implanté au niveau de la lunette arrière 303 du véhicule 300 qui forme dans son ensemble, ou par seulement l'une de ses parties, la surface d'affichage sur laquelle est affichée l'image stéréoscopique.

En outre, sur la FIGURE 4, on a illustré la présence d'une deuxième surface d'affichage, au niveau d'une vitre latérale 304 du véhicule. Le module de commande est adapté pour configurer simultanément les dispositifs lumineux associés à chacune des surfaces d'affichage sur lesquelles il convient d'afficher une image stéréoscopique. On dispose ainsi d'une pluralité de dispositifs lumineux embarqués sur le véhicule et pilotés par le module de commande pour être activés sélectivement ou collectivement en fonction de l'information de proximité. Avantageusement, une source de lumière, ou un ensemble de sources de lumière, peut être commune à chacun des dispositifs lumineux, agencés respectivement au voisinage de surfaces d'affichage distinctes, par l'intermédiaire par exemple d'un réseau de fibres optiques approprié reliant cette source, ou cet ensemble de sources, à chacune des cellules lumineuses propres à l'un ou l'autre des dispositifs lumineux.

Dans le cas illustré sur la FIGURE 4, où l'usager arrive sur l'arrière et le côté du véhicule, les deux dispositifs lumineux peuvent être commandés simultanément pour afficher une image stéréoscopique sur la lunette arrière et une image stéréoscopique sur la vitre latérale. On comprend que si le dispositif de détection renvoie une information de position selon laquelle l'usager arrive uniquement sur l'arrière du véhicule, le module de commande, sur la base de cette information de proximité et de position, commandera uniquement le dispositif lumineux configuré pour afficher une image stéréoscopique sur la lunette arrière.

On va maintenant détailler, en se référant aux FIGURES 5 et 6, un autre intérêt d'une détection de position de l'usager, plutôt que la détection simple de présence de l'usager dans un champ de détection périphérique autour du véhicule.

Les FIGURES 5 et 6 illustrent un exemple de communication d'informations à un usager à proximité d'un véhicule, dans lequel on souhaite porter à l'attention de l'usager qu'il n'a pas fermé le véhicule à clé en sortant du véhicule. Des capteurs appropriés déterminent qu'un usager sort du véhicule, qu'une porte est claquée, et que par la suite aucune action de verrouillage des portes n'est effectuée dans un délai déterminé. La mise en œuvre dans le système de communication d'informations d'un dispositif lumineux permettant l'affichage d'image stéréoscopique permet alors d'afficher une information sous forme d'un pictogramme intuitif pour l'usager, à savoir tel qu'illustré à titre d'exemple sur les FIGURES 5 et 6 un verrou qui image une problématique relative au verrouillage du véhicule.

La FIGURE 5 illustre l'intégration d'un dispositif lumineux 100 dans le véhicule, avec dans le cas illustré la lunette arrière qui fait office de surface d'affichage associée au dispositif lumineux 100. On saura se référer à ce qui précède dans la description pour comprendre la façon dont le module de commande 101 envoie instruction au dispositif lumineux, et notamment à la ou aux sources de lumière 40 et/ou à l'obturateur 30 que comporte ce dispositif lumineux, et pour comprendre la façon dont le dispositif lumineux est disposé au voisinage de la lunette arrière.

Il résulte de la situation que, l'usager étant en train de quitter son véhicule, celui-ci ne porte pas son attention au véhicule qui se trouve derrière lui. Un message visuel, formé par une image stéréoscopique, risque de ne pas être perçu par l'usager s'il n'est pas accompagné d'un signal sonore par exemple.

La FIGURE 6 illustre l'intégration d'un dispositif lumineux 100 dans un appareil portatif porté par l'utilisateur. Dans le cas d'un appareil portatif du type téléphone portable, cas illustré sur la figure 6, l'écran de ce téléphone portable fait office de surface d'affichage associée au dispositif lumineux 100. Dans le cas non illustré d'une clé de véhicule automobile, on saura adapter ladite clé pour intégrer un écran et loger un dispositif lumineux tel que décrit précédemment et configuré pour générer des images stéréoscopiques derrière cet écran. Conformément à ce qui a pu être décrit, le guide d'onde et la pluralité de groupes de réseaux de diffraction sont situés au niveau de l'écran du téléphone portable afin de générer les images stéréoscopiques correspondantes au niveau de l'écran. La ou les sources de lumière sont logées dans la coque de l'appareil. Les dimensions réduites du dispositif lumineux 100 permettent une intégration facile. Les différents composants du dispositif lumineux 100 ne sont pas visibles sur la FIGURE 6 afin de faciliter sa compréhension.

L'exemple illustré sur la FIGURE 6 permet de comprendre que l'usager recevra automatiquement l'information de non verrouillage de son véhicule dès qu'il regardera son appareil portatif, avantageusement son téléphone portable.

Il peut dès lors être particulièrement avantageux qu'un dispositif lumineux soit intégré aussi bien dans le véhicule que dans l'appareil portatif porté par l'usager, et qu'un module de commande détermine, en fonction de la position de l'usager par rapport au véhicule, et notamment l'orientation de son déplacement qui permet de définir s'il s'éloigne ou s'approche du véhicule, s'il doit configurer le dispositif lumineux associé au véhicule ou le dispositif lumineux associé à l'appareil portatif de l'usager afin que l'information soit communiquée le mieux possible.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Système de communication d'informations à un usager (200) à proximité d'un véhicule automobile comprenant :
- au moins une surface d'affichage ;
- un dispositif de détection (102) de la proximité de l'usager par rapport au véhicule, configuré pour détecter et émettre au moins une information de proximité de l'usager ;
- au moins un dispositif lumineux (100) agencé pour afficher au moins une image stéréoscopique (400) sur l'au moins une surface d'affichage correspondante ; et
- un module de commande (101) pour recevoir l'information de proximité de l'usager émis par le dispositif de détection et pour configurer l'image stéréoscopique affichée par le dispositif lumineux en fonction de cette information de proximité de l'usager,
chaque dispositif lumineux (100) comprenant:
- au moins une source de lumière (40) configurée pour pouvoir émettre au moins un rayon lumineux ;
- au moins une cellule lumineuse (10), chaque cellule lumineuse comprenant :
∘ un guide d'onde (17) agencé pour transporter au moins une partie de l'au moins un rayon lumineux émis par la source de lumière correspondante entre une première extrémité située du côté de la source de lumière et une deuxième extrémité ;
∘ au moins un réseau de diffraction (13-15) situé au niveau de la deuxième extrémité du guide d'onde (17), au moins une partie des réseaux de diffraction étant éclairée par l'au moins une partie des rayons lumineux transportés par le guide d'onde afin de générer au moins un lobe de diffraction.

2. Système de communication selon la revendication 1, **caractérisé en ce que** le dispositif de détection (102) est configuré pour calculer au moins une distance et/ou une trajectoire séparant l'usager (200) du véhicule automobile, le module de commande (101) configurant le dispositif lumineux (100) en fonction en outre d'une information de distance et/ou de trajectoire de l'usager.

3. Système de communication selon la revendication 2, **caractérisé en ce qu'**au moins une partie de l'au moins un dispositif lumineux (100) comprend un collimateur (50) agencé pour coupler optiquement l'au moins une source de lumière (40) avec le guide d'onde (17).

4. Système de communication selon l'une quelconque des revendications 2 à 3, **caractérisé en ce que**, pour au moins une partie de l'au moins un dispositif lumineux, un premier réseau de diffraction (13-15) a des premières caractéristiques dimensionnelles et un deuxième réseau de diffraction (13-15) a des deuxièmes caractéristiques dimensionnelles différentes des premières caractéristiques dimensionnelles afin de générer des lobes de diffraction différents lorsqu'ils sont éclairés par l'au moins un rayon lumineux.

5. Système de communication selon la revendication précédente, **caractérisé en ce que**, pour au moins une partie de l'au moins dispositif lumineux, le premier réseau de diffraction (13-15) et le deuxième réseau de diffraction (13-15) sont orientés suivant des directions différentes.

6. Système de communication selon la revendication précédente, **caractérisé en ce que** l'au moins une source de lumière (40) comprend :
- une première source de lumière émettant au moins un rayon lumineux d'une première couleur ;
- une deuxième source de lumière émettant au moins un rayon lumineux d'une deuxième couleur;
- une troisième source de lumière émettant au moins un rayon lumineux d'une troisième couleur.

7. Système de communication selon l'une quelconque des revendications 2 à 6, **caractérisé en ce qu'**au moins une partie de l'au moins un dispositif lumineux (100) comprend un moyen de multiplexage optique agencé pour éclairer sélectivement chaque cellule lumineuse.

8. Système de communication selon l'une quelconque des revendications 2 à 7, **caractérisé en ce qu'**au moins une partie de l'au moins un dispositif lumineux (100) comprend un obturateur optique (30) situé à l'aplomb d'au moins une partie des cellules lumineuses, ledit obturateur optique (30) étant configurable dans une première configuration dans laquelle les images stéréoscopiques (400) formées par la ou les cellules lumineuses correspondantes sont transmises au travers dudit obturateur optique, et une deuxième configuration dans laquelle les images stéréoscopiques formées par la ou les cellules lumineuses correspondantes sont absorbées par ledit obturateur optique.

9. Système de communication selon l'une quelconque des revendications précédentes, **caractérisé en ce que** le dispositif de détection (102) de proximité de l'usager par rapport au véhicule comprend des moyens de communication embarqués sur le véhicule et des moyens de communication embarqués sur un appareil portatif porté par l'usager, ces moyens de communications étant configurés pour communiquer entre eux.

10. Système de communication selon l'une quelconque des revendications précédentes, **caractérisé en ce que** le dispositif de détection (102) comporte des moyens d'acquisition et de traitement d'image, par exemple des moyens photo ou vidéo, configurés pour compléter l'information de proximité de l'usager par une information qualifiant cet usager.

11. Véhicule automobile équipé d'un système de communication d'informations à un usager selon l'une quelconque des revendications 1 à 10, le dispositif lumineux étant embarqué sur le véhicule.

12. Véhicule automobile selon la revendication 11, **caractérisé en ce que** la surface d'affichage est formée par une partie de la carrosserie du véhicule automobile et/ou par au moins une partie du pare-brise et/ou par au moins une partie des vitres latérales et/ou par au moins une partie de la lunette arrière.

13. Véhicule automobile selon la revendication précédente, dans lequel le système de communication d'informations (1) à un usager (200) comprend en outre au moins un élément d'éclairage et/ou de signalisation du véhicule automobile piloté simultanément avec le dispositif lumineux (100) en fonction de l'information de proximité de l'usager.

14. Véhicule automobile selon l'une quelconque des revendications 11 à 13, dans lequel le système de communication d'informations (1) à un usager (200) comporte une pluralité de dispositifs lumineux (100) embarqués sur le véhicule et pilotés par le module de commande (101) pour être activés sélectivement ou collectivement en fonction de l'information de proximité.

15. Véhicule automobile selon la revendication précédente, **caractérisé en ce qu'**une source de lumière (40) est commune à plusieurs dispositifs lumineux agencés respectivement au voisinage de surfaces d'affichage distinctes.

16. Appareil portatif équipé d'un système de communication d'informations à un usager selon l'une quelconque des revendications 1 à 10, le dispositif lumineux étant embarqué sur l'appareil portatif.

17. Appareil portatif selon la revendication précédente, **caractérisé en ce que** l'appareil portatif est du type d'une clef de démarrage du véhicule automobile.

18. Procédé de mise en oeuvre du système de communication d'informations à un usager à proximité d'un véhicule automobile selon la revendication 1 au cours duquel :
- on détecte, par l'intermédiaire d'un dispositif de détection, un usager situé à proximité du véhicule automobile afin de générer une information de proximité dudit usager ;
- le dispositif de détection envoie l'information de proximité de l'usager à un module de commande ;
- le module de commande configure un dispositif lumineux de façon que ce dispositif lumineux affiche au moins une image stéréoscopique sur une surface d'affichage du véhicule ou d'un appareil portatif porté par l'usager, en fonction de l'information de proximité.

## Patentansprüche

1. System zur Kommunikation von Informationen an einen Benutzer (200) in der Nähe eines Kraftfahrzeugs, das enthält:
- mindestens eine Anzeigefläche;
- eine Erkennungsvorrichtung (102) der Nähe des Benutzers bezüglich des Fahrzeugs, konfiguriert, um mindestens eine Information über die Nähe des Benutzers zu erfassen und zu senden;
- mindestens eine Leuchtvorrichtung (100), die eingerichtet ist, mindestens ein stereoskopisches Bild (400) auf mindestens einer entsprechenden Anzeigefläche anzuzeigen; und
- ein Steuermodul (101), um die von der Erkennungsvorrichtung gesendete Information über die Nähe des Benutzers zu empfangen und um das von der Leuchtvorrichtung angezeigte stereoskopische Bild abhängig von dieser Information über die Nähe des Benutzers zu konfigurieren,
wobei jede Leuchtvorrichtung (100) enthält:
- mindestens eine Lichtquelle (40), die konfiguriert ist, mindestens einen Lichtstrahl emittieren zu können;
- mindestens eine Leuchtzelle (10), wobei jede Leuchtzelle enthält:
∘ einen Wellenleiter (17), der eingerichtet ist, mindestens einen Teil des von der entsprechenden Lichtquelle emittierten mindestens einen Lichtstrahls zwischen einem auf der Seite der Lichtquelle befindlichen ersten Ende und einem zweiten Ende zu transportieren;
∘ mindestens ein im Bereich des zweiten Endes des Wellenleiters (17) befindliches Beugungsgitter (13-15), wobei mindestens ein Teil der Beugungsgitter von dem mindestens einen Teil der vom Wellenleiter transportierten Lichtstrahlen beleuchtet wird, um mindestens eine Beugungskeule zu erzeugen.

2. Kommunikationssystem nach Anspruch 1, **dadurch gekennzeichnet, dass** die Erkennungsvorrichtung (102) konfiguriert ist, um mindestens einen Abstand und/oder eine Weglänge zu berechnen, der/die den Benutzer (200) vom Kraftfahrzeug trennt, wobei das Steuermodul (101) die Leuchtvorrichtung (100) außerdem abhängig von einer Abstands- und/oder Weglängeninformation des Benutzers konfiguriert.

3. Kommunikationssystem nach Anspruch 2, **dadurch gekennzeichnet, dass** mindestens ein Teil der mindestens einen Leuchtvorrichtung (100) einen Kollimator (50) enthält, der eingerichtet ist, die mindestens eine Lichtquelle (40) mit dem Wellenleiter (17) optisch zu koppeln.

4. Kommunikationssystem nach einem der Ansprüche 2 bis 3, **dadurch gekennzeichnet, dass** für mindestens einen Teil der mindestens einen Leuchtvorrichtung ein erstes Beugungsgitter (13-15) erste Abmessungsmerkmale hat und ein zweites Beugungsgitter (13-15) zweite Abmessungsmerkmale anders als die ersten Abmessungsmerkmale hat, um andere Beugungskeulen zu erzeugen, wenn sie von dem mindestens einen Lichtstrahl beleuchtet werden.

5. Kommunikationssystem nach dem vorhergehenden Anspruch, **dadurch gekennzeichnet, dass** für mindestens einen Teil der mindestens einen Leuchtvorrichtung das erste Beugungsgitter (13-15) und das zweite Beugungsgitter (13-15) gemäß unterschiedlichen Richtungen ausgerichtet sind.

6. Kommunikationssystem nach dem vorhergehenden Anspruch, **dadurch gekennzeichnet, dass** die mindestens eine Lichtquelle (40) enthält:
- eine erste Lichtquelle, die mindestens einen Lichtstrahl einer ersten Farbe emittiert;
- eine zweite Lichtquelle, die mindestens einen Lichtstrahl einer zweiten Farbe emittiert;
- eine dritte Lichtquelle, die mindestens einen Lichtstrahl einer dritten Farbe emittiert.

7. Kommunikationssystem nach einem der Ansprüche 2 bis 6, **dadurch gekennzeichnet, dass** mindestens ein Teil der mindestens einen Leuchtvorrichtung (100) eine optische Multiplexeinrichtung enthält, die eingerichtet ist, jede Leuchtzelle selektiv zu beleuchten.

8. Kommunikationssystem nach einem der Ansprüche 2 bis 7, **dadurch gekennzeichnet, dass** mindestens ein Teil der mindestens einen Leuchtvorrichtung (100) einen optischen Verschluss (30) enthält, der sich senkrecht zum mindestens einen Teil der Leuchtzellen befindet, wobei der optische Verschluss (30) in einer ersten Konfiguration, in der die von der oder den entsprechenden Leuchtzelle(n) gebildeten stereoskopischen Bilder (400) durch den optischen Verschluss hindurch übertragen werden, und einer zweiten Konfiguration konfigurierbar ist, in der die von der oder den Leuchtzelle(n) gebildeten stereoskopischen Bilder vom optischen Verschluss absorbiert werden.

9. Kommunikationssystem nach einem der vorhergehenden Ansprüche, **dadurch gekennzeichnet, dass** die Erkennungsvorrichtung (102) der Nähe des Benutzers bezüglich des Fahrzeugs in das Fahrzeug eingebaute Kommunikationseinrichtungen und in ein vom Benutzer getragenen tragbaren Gerät eingebaute Kommunikationseinrichtungen enthält, wobei diese Kommunikationseinrichtungen konfiguriert sind, miteinander zu kommunizieren.

10. Kommunikationssystem nach einem der vorhergehenden Ansprüche, **dadurch gekennzeichnet, dass** die Erkennungsvorrichtung (102) Bilderfassungs- und Bildverarbeitungseinrichtungen aufweist, zum Beispiel Foto- oder Videoeinrichtungen, die konfiguriert sind, die Information über die Nähe des Benutzers durch eine diesen Benutzer kennzeichnende Information zu vervollständigen.

11. Kraftfahrzeug, das mit einem System zur Kommunikation von Informationen an einen Benutzer nach einem der Ansprüche 1 bis 10 ausgestattet ist, wobei die Leuchtvorrichtung in das Fahrzeug eingebaut ist.

12. Kraftfahrzeug nach Anspruch 11, **dadurch gekennzeichnet, dass** die Anzeigefläche von einem Teil der Karosserie des Kraftfahrzeugs und/oder von mindestens einem Teil der Windschutzscheibe und/oder von mindestens einem Teil der Seitenfenster und/oder von mindestens einem Teil der Heckscheibe gebildet wird.

13. Kraftfahrzeug nach dem vorhergehenden Anspruch, wobei das System zur Kommunikation von Informationen (1) an einen Benutzer (200) außerdem mindestens ein Beleuchtungs- und/oder Signalisierungselement des Kraftfahrzeugs enthält, das abhängig von der Information über die Nähe des Benutzers gleichzeitig mit der Leuchtvorrichtung (100) gesteuert wird.

14. Kraftfahrzeug nach einem der Ansprüche 11 bis 13, wobei das System zur Kommunikation von Informationen (1) an einen Benutzer (200) eine Vielzahl von Leuchtvorrichtungen (100) aufweist, die in das Fahrzeug eingebaut sind und vom Steuermodul (101) gesteuert werden, um abhängig von der Information über die Nähe selektiv oder kollektiv aktiviert zu werden.

15. Kraftfahrzeug nach dem vorhergehenden Anspruch, **dadurch gekennzeichnet, dass** eine Lichtquelle (40) mehreren Leuchtvorrichtungen gemeinsam ist, die in der Nähe von unterschiedlichen Anzeigeflächen eingerichtet sind.

16. Tragbares Gerät, das mit einem System zur Kommunikation von Informationen an einen Benutzer nach einem der Ansprüche 1 bis 10 ausgestattet ist, wobei die Leuchtvorrichtung in das tragbare Geräts eingebaut ist.

17. Tragbares Gerät nach dem vorhergehenden Anspruch, **dadurch gekennzeichnet, dass** das tragbare Gerät von der Art eines Startschlüssels des Kraftfahrzeugs ist.

18. Verfahren zur Anwendung des Systems zur Kommunikation von Informationen an einen Benutzer in der Nähe eines Kraftfahrzeugs nach Anspruch 1, während dessen:
- mittels einer Erkennungsvorrichtung ein in der Nähe des Kraftfahrzeugs befindlicher Benutzer erkannt wird, um eine Information über die Nähe des Benutzers zu erzeugen;
- die Erkennungsvorrichtung die Information über die Nähe des Benutzers an ein Steuermodul sendet;
- das Steuermodul eine Leuchtvorrichtung so konfiguriert, dass diese Leuchtvorrichtung mindestens ein stereoskopisches Bild auf einer Anzeigefläche des Fahrzeugs oder eines vom Benutzer getragenen tragbaren Geräts abhängig von der Information über die Nähe anzeigt.

## Claims

1. System for communicating information to a user (200) in the vicinity of a motor vehicle, comprising:
- at least one display surface;
- a device (102) for detecting the proximity of the user in relation to the vehicle, which is configured to detect and transmit at least one item of user proximity information;
- at least one lighting device (100), which is designed to display at least one stereoscopic image (400) on the at least one corresponding display surface; and
- a control module (101) for receiving the item of user proximity information transmitted by the detection device and for configuring the stereoscopic image displayed by the lighting device on the basis of this item of user proximity information, each lighting device (100) comprising:
- at least one light source (40), which is configured to be able to emit at least one light ray;
- at least one light cell (10), each light cell comprising:
∘ a waveguide (17), which is designed to carry at least a portion of the at least one light ray emitted by the corresponding light source between a first end located at the light source side and a second end;
∘ at least one diffraction grating (13-15), which is located at the second end of the waveguide (17), at least a portion of the diffraction gratings being illuminated by the at least one portion of the light rays carried by the waveguide so as to generate at least one diffraction lobe.

2. Communication system according to Claim 1, **characterized in that** the detection device (102) is configured to calculate at least a distance and/or a trajectory separating the user (200) from the motor vehicle, the control module (101) configuring the lighting device (100) on the basis, additionally, of an item of user distance and/or trajectory information.

3. Communication system according to Claim 2, **characterized in that** at least a portion of the at least one lighting device (100) comprises a collimator (50), which is designed to optically couple the at least one light source (40) with the waveguide (17).

4. Communication system according to either one of Claims 2 and 3, **characterized in that**, for at least a portion of the at least one lighting device, a first diffraction grating (13-15) has first dimensional characteristics, and a second diffraction grating (13-15) has second dimensional characteristics that are different from the first dimensional characteristics so as to generate different diffraction lobes when they are illuminated by the at least one light ray.

5. Communication system according to the preceding claim, **characterized in that**, for at least a portion of the at least one lighting device, the first diffraction grating (13-15) and the second diffraction grating (13-15) are oriented in different directions.

6. Communication system according to the preceding claim, **characterized in that** the at least one light source (40) comprises:
- a first light source, which emits at least one light ray of a first colour;
- a second light source, which emits at least one light ray of a second colour;
- a third light source, which emits at least one light ray of a third colour.

7. Communication system according to any one of Claims 2 to 6, **characterized in that** at least a portion of the at least one lighting device (100) comprises an optical multiplexing means, which is designed to selectively illuminate each light cell.

8. Communication system according to any one of Claims 2 to 7, **characterized in that** at least a portion of the at least one lighting device (100) comprises an optical shutter (30) located vertically in line with at least a portion of the light cells, said optical shutter (30) being able to be configured in a first configuration in which the stereoscopic images (400) formed by the one or more corresponding light cells are transmitted through said optical shutter, and a second configuration in which the stereoscopic images formed by the one or more corresponding light cells are absorbed by said optical shutter.

9. Communication system according to any one of the preceding claims, **characterized in that** the device (102) for detecting the proximity of the user in relation to the vehicle comprises communication means on board the vehicle and communication means installed on a portable device carried by the user, these communication means being configured to communicate with one another.

10. Communication system according to any one of the preceding claims, **characterized in that** the detection device (102) includes image acquisition and processing means, for example photo or video means, which are configured to supplement the item of user proximity information with an item of information qualifying said user.

11. Motor vehicle equipped with a system for communicating information to a user according to any one of Claims 1 to 10, the lighting device being on board the vehicle.

12. Motor vehicle according to Claim 11, **characterized in that** the display surface is formed by a portion of the bodywork of the motor vehicle and/or by at least a portion of the windscreen and/or by at least a portion of the side windows and/or by at least a portion of the rear window.

13. Motor vehicle according to the preceding claim, wherein the system (1) for communicating information to a user (200) further comprises at least one lighting and/or signalling element of the motor vehicle, which is controlled simultaneously with the lighting device (100) on the basis of the item of user proximity information.

14. Motor vehicle according to any one of Claims 11 to 13, wherein the system (1) for communicating information to a user (200) includes a plurality of lighting devices (100) that are on board the vehicle and are controlled by the control module (101) so as to be activated selectively or collectively on the basis of the item of proximity information.

15. Motor vehicle according to the preceding claim, **characterized in that** a light source (40) is common to several lighting devices arranged, respectively, close to distinct display surfaces.

16. Portable device provided with a system for communicating information to a user according to any one of Claims 1 to 10, the lighting device being installed on the portable device.

17. Portable device according to the preceding claim, **characterized in that** the portable device is a device such as a starting key for the motor vehicle.

18. Method for implementing the system for communicating information to a user in the vicinity of a motor vehicle according to Claim 1, during which method:
- a user located in the vicinity of the motor vehicle is detected by means of a detection device so as to generate an item of proximity information for said user;
- the detection device sends the item of user proximity information to a control module;
- the control module configures a lighting device such that this lighting device displays at least one stereoscopic image on a display surface of the vehicle or of a portable device carried by the user, on the basis of the item of proximity information.
